Europäisches Patentamt

European Patent Office

Office européen des brevets

(11) Numéro de publication: **0 119 876**
**A2**

## (12) DEMANDE DE BREVET EUROPEEN

(21) Numéro de dépôt: **84400221.2**

(22) Date de dépôt: **01.02.84**

(51) Int. Cl.³: **G 01 B 21/00, G 01 B 7/00**

(30) Priorité: **15.02.83 FR 8302374**

(43) Date de publication de la demande: **26.09.84**
**Bulletin 84/39**

(84) Etats contractants désignés: **DE FR GB IT**

(71) Demandeur: **SOURIAU & Cie (S.A.), 9/13, rue du Général Galliéni, F-92103 Boulogne-Billancourt (FR)**

(72) Inventeur: **Roy, Jacques, 4, Square Raynouard, F-78150 Rocquencourt (FR)**

(74) Mandataire: **Flavenot, Bernard, Société S.E.D.I.C. 40 rue Victor Basch, F-92120 Montrouge (FR)**

(54) **Procédé et dispositif pour vérifier les châssis de véhicules du type automobile.**

(57) La présente invention concerne les procédé et dispositif de vérification d'un châssis du type véhicule automobile.

Le procédé consiste:

— à placer le véhicule 1 en surplomb par rapport à un point O d'observation, le point O étant défini de façon à pouvoir apercevoir le châssis 3 quand le véhicule est en position de surplomb,

— à relever la position de différents points donnés du châssis 3 en coordonnées polaires,

— à calculer les cotes relatives des points en coordonnées cartésiennes à partir de coordonnées polaires, et,

— à comparer les coordonnées cartésiennes calculées par rapport à des données cartésiennes de référence définissant le châssis 3 non déformé.

Application aux contrôles géométriques des châssis de véhicules.

- 1 -

## " PROCEDE ET DISPOSITIF POUR VERIFIER LES CHASSIS DE VEHICULES DU TYPE AUTOMOBILE.

La présente invention concerne les procédés et les dispositifs pour vérifier l'état des châssis de véhicules du type automobile, et plus particulièrement la conformité du châssis par rapport à un châssis type dont les cotes sont données par le constructeur du véhicule.

Un véhicule automobile comprend plusieurs constituants importants, mais parmi ceux-ci au moins un, en l'occurrence le châssis, est certainement le plus important puisque c'est de lui que dépendent tous les autres. En effet, un châssis sert de référence à un certain nombre d'éléments vitaux, comme par exemple les moyens de roulement.

La conséquence est que le châssis doit être parfaitement rigide et avoir des cotes parfaitement définies.

C'est ainsi que lorsqu'un véhicule a été impliqué dans un accident paraissant relativement important il est absolument nécessaire pour la sécurité des passagers potentiels futurs, aptes à utiliser le véhicule, de vérifier, préalablement à une réutilisation du véhicule, que le châssis n'ait subit aucune déformation notable.

Pour effectuer ces vérifications actuellement on démonte presque entièrement le véhicule en le dépouillant notamment de la carrosserie et autres éléments volumineux pour mettre presque à nu le châssis. Une fois le châssis libéré de ceux-ci il est placé sur une surface plane de référence que les techniciens ont pris l'habitude de dénommer "marbre". Cette dénomination provient du fait qu'à l'origine ce plan de référence était constitué par une dalle de marbre indéformable et parfaitement surfacée. Actuellement ce "marbre" est constitué par un ensemble de poutres rigides liées les unes aux autres pour former un ensemble de points contenus

- 2 -

0119876

dans une surface plane qui est de ce fait bien définie.

Lorsque le châssis est positionné sur ce "marbre", on relève au moyen de mesureurs du type à vis micrométriques, palmer, etc... les coordonnées cartésiennes des différents points bien précis et préalablement définis par le constructeur. Les coordonnées de ces points qui sont relevés permettent de définir les différents points les uns par rapport aux autres par un ensemble de cotes. Connaissant l'ensemble de ces cotes il est possible de les comparer à un ensemble de cotes qui est donné pour un châssis modèle c'est-à--dire non modifié par un accident. Ainsi quand la comparaison de ces coordonnées relevée par rapport à celle du châssis type laisse apparaître des écarts trop grands, l'expert en la matière, éventuellement avec des tableaux de tolérance, décide si le châssis déformé peut être rectifié ou non c'est-à-dire être réutilisé ou alors mis au rebut.

Avec la méthode telle que rappelée ci-dessus il est incontestable qu'elle demande une intervention des mécaniciens pour le démontage de tous les éléments essentiels car il est nécessaire de dépouiller le châssis, de plus la mesure des coordonnées cartersiennes par rapport à un plan de référence est relativement longue et onéreuse essentiellement du fait de la nécessité d'utiliser un plan ou "marbre" qui est un élément onéreux.

L'état de ce fait, c'est que lorsque des véhicules sont impliqués dans des accidents qui paraissent relativement bénins on ne vérifie pas le châssis. Ainsi certains véhicules continuent à circuler tout en ayant un châssis légèrement déformé. Bien entendu une légère déformation du châssis n'est pas nécessairement dangereuse, mais cela peut malgré tout entraîner des usures prématurées de certaines pièces du véhicule comme par exemple les pneumatiques.

La présente invention a pour but de mettre en oeuvre un procédé de vérifications de châssis de véhicule du type automobile qui permettent notamment une mesure aussi précise que celle obtenue avec les procédés selon l'art antérieur mais sans avoir à effectuer la moindre intervention de démontage sur le véhicule afin de gagner

un temps incontestable.

La présente invention a aussi pour but de réaliser un dispositif permettant de mettre en oeuvre le procédé mentionné ci-dessus.

Plus précisément la présente invention a pour objet un procédé de vérifications d'un châssis du type véhicule automobile caractérisé par le fait qu'il consiste :

- à placer ledit véhicule en surplomb par rapport à un point d'observation, ledit point étant défini de façon à pouvoir apercevoir ledit châssis quand ledit véhicule est en position de surplomb,

- à relever la position de différents points donnés dudit châssis en coordonnées polaires,

- calculer les cotes relatives desdit points en coordonnées cartésiennes à partir de coordonnées polaires relevées, et, à comparer lesdites coordonnées cartésiennes calculées par rapport à des données cartésiennes de référence définissant le châssis non déformé.

La présente invention a aussi pour objet un dispositif permettant de vérifier le châssis d'un véhicule du type automobile caractérisé par le fait qu'il comprend

- une embase,

- une tête pivotante sur ladite embase autour d'au moins deux axes non parallèles,

- des moyens pour définir une longueur rectiligne entre un point de l'espace et un point déterminé de ladite tête,

- des moyens pour définir la position angulaire de ladite tête par rapport à ladite embase.

D'autres caractéristiques et avantages de la présente invention apparaîtront au cours de la description suivante donnée en regard des dessins annexés à titre illustratif mais nullement limitatif dans lesquels :

- la figure 1 représente un schéma permettant d'expliciter la mise en oeuvre du procédé selon l'invention,

- la figure 2 un autre exemple de mise en oeuvre du procédé selon l'invention dans un perfectionnement par rapport à celui explicité par la figure 1,

- la figure 3 un exemple de réalisation de mise en oeuvre d'un dispositif permettant la vérification d'un châssis de véhicule du type automobile selon le procédé explicité avec l'une ou l'autre des figures 1 et 2.

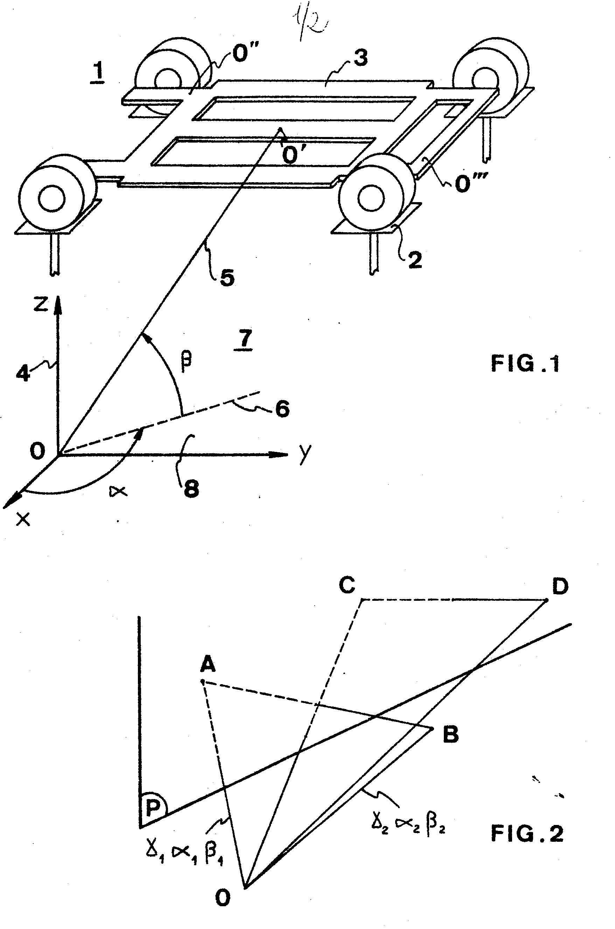

En revenant plus particulièrement à la figure 1 celle-ci représente un exemple de mise en oeuvre du procédé selon l'invention pour la vérification d'un châssis de véhicule du type automobile.

Dans une première étape on place le véhicule 1 pour le mettre en surplomb par rapport à un point dit d'observation O. Dans la pratique le véhicule sera placé sur un pont élévateur 2 sans que le véhicule n'ait à subir aucune opération de démontage de quelques pièces que ce soit.

Le point O d'observation est déterminé de façon à ce que de sa situation on puisse voir l'ensemble ou presque du châssis 3 du véhicule 1 dans un champs de vision donné. En effet on sait que toutes les voitures ou presque sont généralement conçues de la même façon et le châssis est presque entièrement apparent lorsque l'on observe ce véhicule en dessous.

Une fois le véhicule placé en surplomb, du point O, et l'emplacement de ce point parfaitement défini, il existe une possibilité pour faire un relevé du type topographique d'une pluralité de point du châssis du véhicule en coordonnées polaires ayant pour origine le point O.

Par rapport par exemple à un référentiel fixe et prédéterminé 4 de préférence orthonomé O, x, y, z on détermine l'orientation d'un axe 5 passant part le point origine O et un point O' du châssis 3, ce point O' étant parfaitement déterminé ou déterminable. Cette orientation de l'axe 5 peut être défini par :

Premièrement l'angle $\propto$ que fait la trace 6 d'un plan 7 contenant l'axe Oz et l'axe 5 avec le plan O, x, y,

Deuxièmement dans le plan 7 un angle $\beta$ que fait entre eux l'axe 5 et la trace 6 tels qu'ils ont été définis ci-dessus.

Dans ce type de coordonnées il est aussi possible de définir la longueur $\delta$ de l'axe 5 prise entre les deux points O et O'.

Avec ces trois données $\alpha$ , $\beta$ , $\delta$ , le point O' est parfaitement défini dans le référentiel 4 ayant pour origine le point O. On peut ainsi procéder pour plusieurs points remarquables du châssis 3 c'est-à--dire des points O' O" O'''.

L'ensemble de ces coordonnées relevées pour chaque point permettent ainsi de pouvoir par des calculs appropriés facilement réalisables maintenant à l'aide des microprocesseurs, de définir les différentes cotes du châssis entre ces différents points remarquables relevés en coordonnées polaires. Ces cotes sont alors comparées à celles données par le constructeur qui sont toujours données en coordonnées cartésiennes. Si des écarts trop importants sont constatés le châssis doit faire l'objet impérativement d'une intervention ; celle-ci pouvant être soit la retouche ou alors tout simplement sa mise au rebut.

Le procédé décrit ci-dessus est une mise en oeuvre du procédé, dans sa généralité. Il peut être malgré tout, dans certaines circonstances faire l'objet d'une amélioration essentiellement dans le cas où le châssis du véhicule est symétrique par rapport à un plan médian. Ceci est d'autant plus vrai que la grande majorité des véhicules ont des châssis symétriques, les exceptions étant très rares. De ce fait en application de cette qualité des châssis, pour mettre en oeuvre le procédé, on détermine deux couples de points deux à deux, par exemple le premier couple A-B et un deuxième couple C-D. Ces couples de points symétriques sont généralement donnés par le constructeur du véhicule sur une fiche technique. Ensuite on effectue conformément à ce qui a été décrit selon le procédé général, le relevé en coordonnées polaires des deux points A-B par rapport au point origine O. Ceci donne deux ensembles de données $\delta_1, \alpha_1, \beta_1$, et $\delta_2, \alpha_2, \beta_2$. Connaissant ces six données on peut très facilement à l'aide du microprocesseur calculer les coordonnées du plan P médiateur du segment A-B. Si le châssis est conforme aux données du constructeur ce plan P doit donc correspondre au plan de symétrie du châssis. On effectue ensuite un deuxième relevé en coordonnées polaires du deuxième couple

de points C-D, ces derniers relevés permettent de définir un second plan P' médiateur du segment C-D. On obtient donc selon ce procédé deux ensembles de données définissant respectivement deux plans. On effectue alors une comparaison de ces données et on détermine si les deux plans médiateurs respectivement les segments A-B et C-D sont confondus. Si cette comparaison fait apparaître que les deux plans ne sont pas confondus il est alors incontestable que le châssis a subi une déformation. Par contre si ces deux plans sont confondus on pourrait supposer que le châssis n'ait subit aucune déformation. Ceci n'est pas absolument vrai car le châssis a pu être déformé plus ponctuellement. Pour lever cette ambiguïté on peut procéder en relevant une pluralité de coordonnées de couples de points symétriques pour tendre à s'assurer que le châssis est en bon état. En relevant un certain nombre important de ces couples on réduit d'autant plus l'incertitude. Comme précédemment c'est toujours l'expert, homme de l'art en la matière, qui déterminera, en fonction des écarts constatés, si le châssis peut être récupéré ou non.

Les mises en oeuvre du procédé décrit ci-dessus dans ces différentes mises en oeuvre présentent incontestablement des avantages par rapport au procédé selon l'art antérieur rappelé ci-avant.

Mais de plus il permet la mise en oeuvre d'un dispositif qui est d'une réalisation très simple et donc d'un coût de revient incontestablement moins élevé que celui selon la méthode du "marbre" rappelée ci-avant.

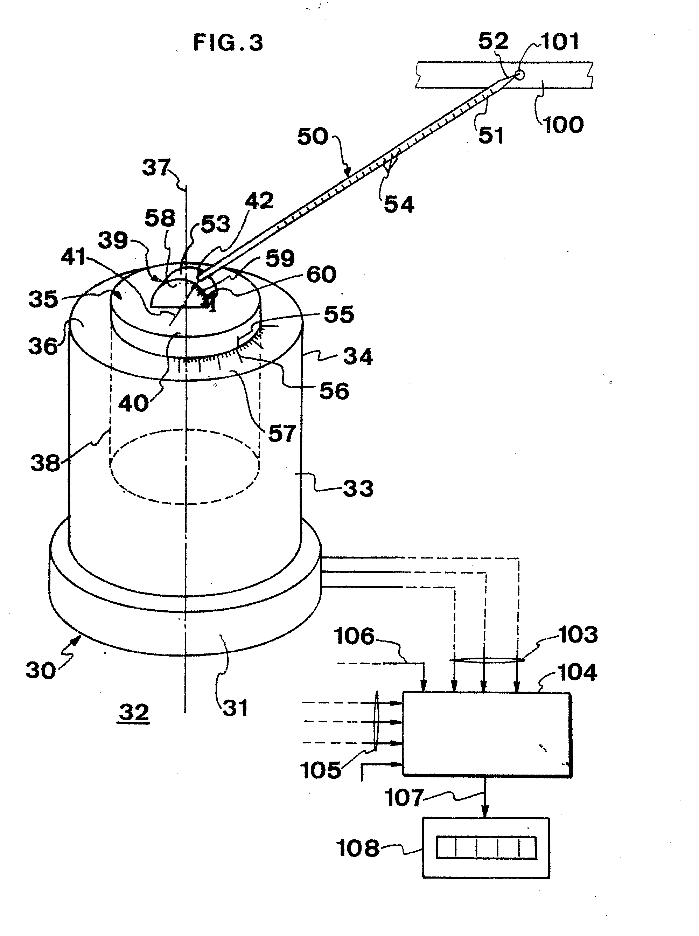

Un exemple de réalisation d'un tel dispositif est illustré sur la figure 3. Sur cette figure 3 est représenté un dispositif de vérifications du châssis d'un véhicule automobile conprenant une embase 30 avantageusement constituée d'une part par un socle lourd 31 pour assurer une bonne stabilité au sol 32 de cette embase 30 et d'autre part une colonne 33 surmontant ce socle 31. Au sommet 34 de cette colonne 33 est montée pivotante une première pièce 35 , par exemple dans une percée 38 débouchant sur la face supérieure 36 de cette colonne 33, cette pièce 35 peut pivoter autour d'un axe 37 qui sera déterminé par exemple pour une position normale d'utilisation, verticalement. Cette pièce 35 est avantageusement constituée par un cylindre de révolution pivotant avec un minimum de jeu dans la percée 38 mais dépassant la face 36 d'une certaine quantité.

Surmontant cette première pièce 35, une deuxième pièce 39 est aussi montée pivotante sur le sommet 40 de cette première pièce. Cependant cette deuxième pièce 39 est montée pivotante autour un axe 41 qui est non confondu avec le 37 et non parallèle. Avantageusement, ces deux axes 37 et 41 seront perpendiculaires et concourants.

De plus à l'intérieur de cette deuxième pièce 39, à la manière d'un ruban souple s'enroulant autour de lui-même grâce à des moyens élastiques et dans un logement centré sur l'axe 41 définit ci-dessus, est disposée une pièce souple métallique ayant un minimum de coefficient de dilatation tel que par exemple un ruban 50. Ce ruban 50 a une extrémité 51 définie par une pointe d'extrémité 52, ce ruban 50 peut de plus comporter sur toute sa longueur des indications permettant de donner directement sa longueur émergente par l'orifice 42 réalisé dans la paroi latérale 53 de la deuxième pièce 39. Ceci peut être fait par des traits 54 à la manière par exemple d'un mètre ruban.

De plus la position de la première pièce 35 telle qu'elle a été définie ci-dessus, du moins sa position angulaire, peut être déterminée par la position d'une marque 55 sur la paroi cylindrique de cette pièce 35 par rapport à un ensemble de données définissant des angles 56 réalisés sur la face supérieure 36 de la colonne 33, une position origine pouvant être définie par exemple 57 sur la colonne 33. De même sur au moins une des faces planes latérales de la deuxième pièce 39 par exemple la face 58 sont définies des marques 59 définissant une position angulaire de cette pièce 39 par rapport à un point origine qui peut être un index 60 réalisé sur la face 40 supérieure de la première pièce 35. On voit donc qu'avec le dispositif tel que illustré lorsque il est positionné sur le sol 32 relativement fixe du fait du socle lourd 31, il est possible par rapport à un châssis 100 illustré très schématiquement de définir la position d'un point 101 de ce châssis 100 en effectuant

- 8 -

0119876

les opérations suivantes ;

c'est-à-dire en faisant pivoter par exemple la première pièce 35 par rapport à la colonne 33 et en relevant ainsi la position de l'index par rapport aux marques 56 et en définissant une position angulaire de façon à ce que l'axe de la bande 50 soit dirigé vers le point 101 ensuite on peut pivoter la deuxième pièce 39 par rapport à la première pour que l'axe de cette bande 50 et, non plus son plan passe par le point 101, dans cette position on tire la bande 50 pour amener son extrémité pointue 52 dans le point 101 du châssis qui généralement est marqué par une petite coupelle réalisée directement dans les pièces constitutives du châssis 100. Lorsque cette extrémité pointue 52 de la bande 50 est bien positionnée dans cette coupelle 101, on relève la longueur séparant le point origine O qui est l'intersection des deux axes 37 et 41, en mesurant la longueur de la bande 50 émergente. On obtient donc pour ce point 101 un ensemble de trois données sous forme de deux angles et d'une longueur. Ces trois données sont ensuite introduites par exemple de façon manuelle ou éventuellement si nécessaire automatique par les entrées 103 d'un calculateur 104. Aux autres entrées de comparaison 105 sont introduites les vraies données du point101 en coordonnées cartésiennes par rapport à une référence arbitraire. On peut ainsi opérer plusieurs fois pour plusieurs couples de points 101 en ayant soin de commander à chaque fois par l'entrée schématiquement 106 d'attribution du point mesuré. L'ensemble de toutes ces données sont alors analysées et interprétées par le calculateur 104 qui peut délivrer à sa sortie 107 le résultat de la comparaison qui peut être affiché sur un écran par exemple de visualisation vidéo 108. L'expert analysera ses données de résultat de comparaison et déterminera ce qui est absolument nécessaire de faire avec ce châssis soit intervenir pour le réparer, le rectifier, etc ... ou alors tout simplement le mettre au rebut.

## REVENDICATIONS

1) *Procédé de vérification d'un châssis du type véhicule automobile caractérisé par le fait qu'il consiste :*

- *à placer ledit véhicule en surplomb par rapport à un point d'observation, ledit point étant défini de façon à pouvoirapercevoir ledit châssis quand ledit véhicule est en position de surplomb,*

- *à relever la position de différents points donnés dudit châssis en coordonnées polaires,*

- *à calculer les cotes relatives desdit points en coordonnées cartésiennes à partir de coordonnées polaires relevés, et,*

- *à comparer lesdites coordonnées cartésiennes calculées par rapport à des données cartésiennes de référence définissant le châssis non déformé.*

2) *Procédé selon la revendication 1, caractérisé par le fait qu'il consiste à relever la position de deux points présumés symétriques du châssis et à déterminer les coordonnées d'un plan médiateur du segment reliant ces deux points, à effectuer la même opération sur deux mêmes points présumés symétriques dudit châssis et à comparer les coordonnée des deux plans.*

3) *Dispositif permettant de vérifier le châssis d'un véhicule du type automobile, caractérisé par le fait qu'il comprend :*

- *une embase,*

- *une tête pivotante sur ladite embase autopur d'au moins deux axes non parallèles,*

- *des moyens pour définir une longueur rectiligne entre un point de l'espace et un point déterminé de ladite tête,*

- *des moyens pour définir la position angulaire de ladite tête par rapport à ladite embase.*

FIG.1

FIG.2

FIG.3

0119876